Europäisches Patentamt

European Patent Office

Office européen des brevets

(11) Publication number : **0 470 817 A2**

# (12) EUROPEAN PATENT APPLICATION

(21) Application number : 91307232.8

(22) Date of filing : 06.08.91

(51) Int. Cl.⁵ : **G02F 1/137**, G02F 1/1335

(30) Priority : **09.08.90 JP 210813/90**
**06.09.90 JP 236455/90**

(43) Date of publication of application :
**12.02.92 Bulletin 92/07**

(84) Designated Contracting States :
**DE FR GB NL**

(71) Applicant : **SEIKO EPSON CORPORATION**
**4-1, Nishishinjuku 2-chome**
**Shinjuku-ku Tokyo (JP)**

(72) Inventor : **Sonehara, Tomio, c/o SEIKO EPSON**
**CORPORATION**
**3-5 Owa 3-chome**
**Suwa-shi, Nagano-ken (JP)**
Inventor : **Okumura, Osamu, c/o SEIKO EPSON**
**CORPORATION**
**3-5 Owa 3-chome**
**Suwa-shi, Nagano-ken (JP)**

(74) Representative : **Miller, Joseph et al**
**J. MILLER & CO. Lincoln House 296-302 High**
**Holborn**
**London WC1V 7JH (GB)**

(54) **Liquid crystal electro-optical device.**

(57)   The invention provides a liquid crystal electro-optical device of the reflective type. The device comprises a twisted nematic liquid crystal layer (104) sandwiched between two opposed substrates (101, 103), a polarising element (106) for polarising light entering the liquid crystal layer, and a reflective element (102) for reflecting light transmitted by the liquid crystal layer. The polarising element, the liquid crystal layer and the reflective element are arranged to co-operate in one state of the electro-optical device so as to convert the light between linearly polarised light at one surface of the liquid crystal layer and circularly polarised light at the other surface of the liquid crystal layer. Further, the direction of polarisation of light emerging from the liquid crystal layer is altered relative to the direction of polarisation of light entering the liquid crystal layer.

FIG. 1

The invention relates to liquid crystal electro-optical devices of the reflective-type.

Prior art liquid crystal electro-optical devices of the reflective-type that employ a twisted liquid crystal material, as described in US Patent No. 4019807 and Japanese published Patent No. 56-43681, use an optically uniaxial electro-optical medium as a 1/4 λ wavelength plate with a twist angle of 45° and emit elliptically polarised light from the liquid crystal layer.

Some prior art liquid crystal electro-optical devices of the reflective-type employ an STN mode for the liquid crystal layer.

In these liquid crystal electro-optical devices of the reflective-type, there is little allowable margin for the thickness of the liquid crystal layer, and the display performance may be inconsistent. Another problem is the reduction in the quantity of emitted light because such light is elliptically polarised. Further, a dark display and colouring are significant problems in prior art liquid crystal display devices of the reflective-type employing an STN mode for the liquid crystal layer, and the display image may also appear as a double image.

An object of the present invention is to provide an electro-optical device of the reflective-type wherein a new liquid crystal reflection mode is introduced, that reduces light loss.

According to one aspect of the present invention, there is provided a liquid crystal electro-optical device of the reflective-type having a twisted nematic liquid crystal layer sandwiched between two opposed substrates, a polarising element for polarising light entering the liquid crysal layer, and a reflective element for reflecting light transmitted by the liquid crystal layer, characterised in that the polarising element, the liquid crystal layer and the reflective element are arranged to co-operate in one state of the electro-optical device so as to convert the light between linearly polarised light at one surface of the liquid crystal layer and circularly polarised light at the other surface of the liquid crystal layer, and so as to alter the direction of polarisation of light emerging from the liquid crystal layer relative to that of light entering the liquid crystal layer.

The invention advantageously optimises the liquid crystal layer parameters: namely, twist angle, the product of the birefringence of the liquid crystal material and the liquid crystal layer thickness (expressed as $\Delta$ nd and noted in $\mu$m) and the incident polarisation.

The invention as described in its preferred form provides an electro-optical device which has a large allowable margin for production, in which there is little colouration and in which double imaging of the display is prevented.

The invention is described further, by way of example, with reference to the accompanying drawings, in which:

Figure 1 is a cross-section through a liquid crystal electro-optical device according to the invention;

Figure 2 is a diagrammatic perspective view showing the orientation of liquid crystal molecules of the device of figure 1;

Figure 3 is a graph of impressed voltage-v-reflectivity for the device of figure 1;

Figure 4 is a diagram showing the locus of elliptically polarised light in the device of figure 1;

Figures 5(a), 5(b) and 5(c) are graphs of reflectivity -v- $\Delta$ nd in the OFF condition of the device of figure 1;

Figure 6(a) is a graph showing the relationship between polarising plate angle and twist angle, and figure 6(b) is a graph showing the relationship between twist angle and $\Delta$ nd for the device of figure 1;

Figure 7 is a diagram showing a modification of the liquid crystal electro-optical device of figure 1, in which a polarising beam splitter is used as a polarising element;

Figure 8 is a cross-section of an active matrix display panel including a liquid crystal electro-optical device according to the invention;

Figure 9 is a cross-section through a device for performing writing by means of light including an electro-optical device according to the invention;

Figure 10 is a cross-section through another embodiment of liquid crystal electro-optical device according to the invention;

Figure 11 is a graph showing the reflection spectrum in the OFF condition of the device of figure 10;

Figure 12 is a graph of impressed voltage-v-reflectivity for the device of figure 10;

Figure 13 is a diagram showing the change in the locus of polarised light in the device of figure 10 in the OFF condition;

Figure 14 is a diagram showing the relationship between twist angle and $\Delta$ nd for the device of figure 10;

Figure 15 is an exploded cross-section through a further embodiment of liquid crystal electro-optical device according to the invention;

Figure 16 is an exploded cross-section through a modification of the device of figure 15;

Figure 17 is a diagram showing the relationship between the various axes in a liquid crystal cell of the device of figures 15 and 16; and

Figure 18 is a graph showing the spectral characteristics when the electric field is respectively OFF and ON of the device of figures 15 and 16.

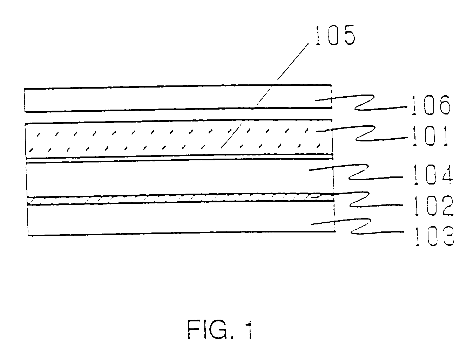

Figure 1 is a cross-section through an electro-optical device according to the invention of the reflective type. The device comprises a twisted nematic liquid crystal layer 104 sandwiched between a transrarent substate 101 and an opposing substrate 103, on which a reflective layer 102 is provided. A polarising element 106 polarises and analyses incident light entering the layer 104 and emitted light emerging from layer 104. A transparent electrode 105 impresses an electric field on the liquid crystal layer 104. The reflective layer 102, which is formed from a metal thin film, also serves as another electrode. The incidence and emission surfaces and the transparent electrode surfaces are treated with a coating to reduce unwanted reflection.

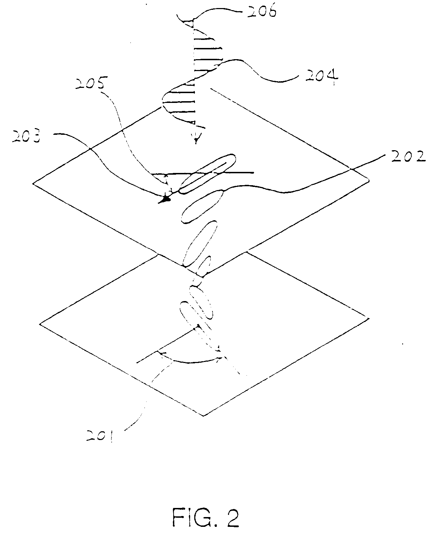

Figure 2 is a diagrammatic perspective view showing the orientation of the liquid crystal molecules 202. The incident light 206; which enters the liquid crystal layer 104 and which is linearly polarised by the polarising element 106, is incident at an angle 205 (referred to below as the polarising plate angle) between a liquid crystal molecule direction 203 on the incidence side and an electric field excitation surface 204. The liquid crystal molecules 202 are orientated parallel to the substrate interface as shown in figure 2 when the impressed voltage is zero, and a twist angle 201 is formed between the upper and lower substrates due to orientation processing performed prior to assembly. This orientation processing can comprise rubbing, oblique deposition, or some other method. The parameters of the liquid crystal cell are the twist angle 201 of the nematic crystal layer 104, $\Delta$ nd and the polarising plate angle 205. In the explanation below, the same direction of rotation as viewed from the front of the reflective layer is positive for all angle parameters.

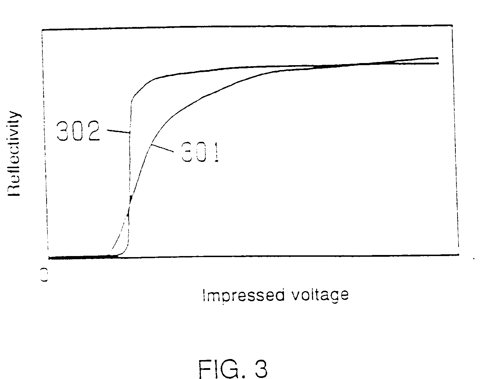

Figure 3 shows the relationship between the impressed voltage and the reflectivity for two different examples of the device in figure 1. The characteristics of the examples are respectively as follows: in the first example, the twist angle 301 is 63°, $\Delta$ nd is 0.2 and the polarising plate angle is 0°; in the second example, the twist angle 302 is 180°, $\Delta$ nd id 0.56 and the polarising plate angle is 83°. The wavelength used was 550 nm.

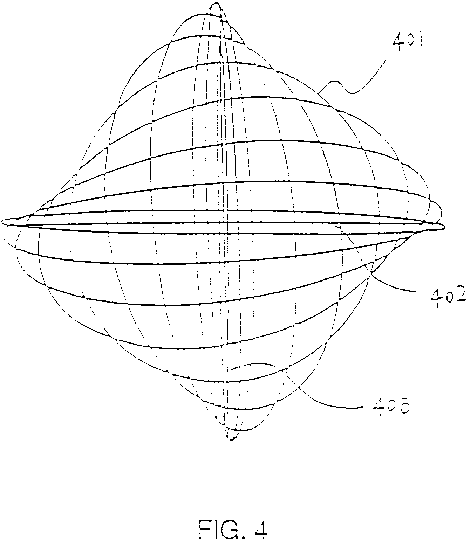

Next, a simple explanation of the principle will be given. Figure 4 shows the change in polarisation in the liquid crystal layer 104. The explanation is based on the simplest case in which the twist angle is 63°, $\Delta$ nd is 0.2 and the polarising plate angle is 0°. When linearly polarised light 402 enters the layer 104 while the voltage is zero, the light becomes elliptically polarised and is rotated as shown in the figure, becoming nearly circularly polarised light 401 at the reflective surface. The light is then reflected, after which it becomes elliptically polarised light again in the liquid crystal layer 104 and then linearly polarised light 403, whose plane of polarisation has been rotated through 90°, at the emission surface. Therefore, the light is stopped at the polarising plate and reflectivity drops (the OFF condition). When a voltage is impressed, the liquid crystal molecules become re-oriented in the direction of the electric field because of the anisotropy of their dielectric constant. In this condition, there is no birefringence in the liquid crystal layer, and therefore incident linearly polarised light maintains its polarisation as it is reflected and transmitted. Therefore, reflectivity does not drop (the ON condition).

There are only limited conditions, which can produce this unique change in polarisation, and this invention is a result of a diligent investigation of these conditions. The two optical characteristics required of the liquid crystal layer 104 are that it changes incident linearly polarised light to become circular polarised light at the reflective surface after transmission, and that it rotates the plane of polarisation of the light through 90° as the light passes through the liquid crystal layer.

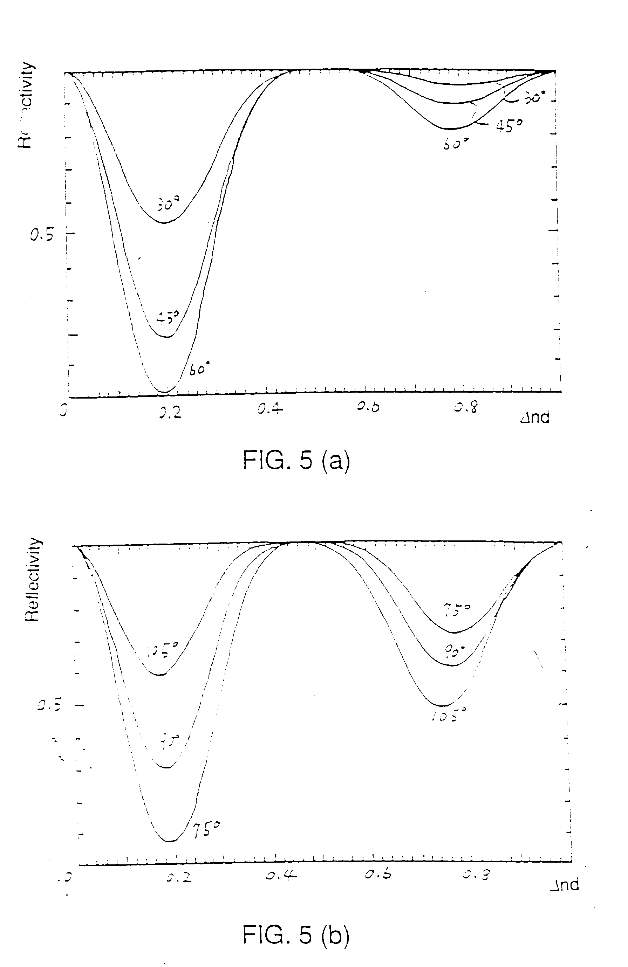

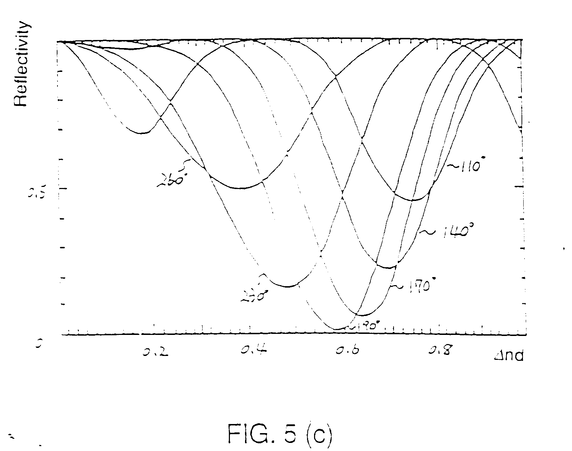

The parameters of a liquid crystal cell that satisfies these conditions are explained below. Figures 5(a), 5(b) and 5(c) are graphs showing the relationship between $\Delta$ nd and reflectivity in the OFF condition. As for the parameters, the twist angle was set in each case and the polarising plate angle was 0°. It was found that the reflectivity was nearly zero when the twist angle was approximately 60° and $\Delta$ nd was 0.2. Further investigation revealed that a twist angle of 63° was optimal. The reflectivity in the ON condition, however, is determined by the transmissivity of the polarising element and is nearly constant.

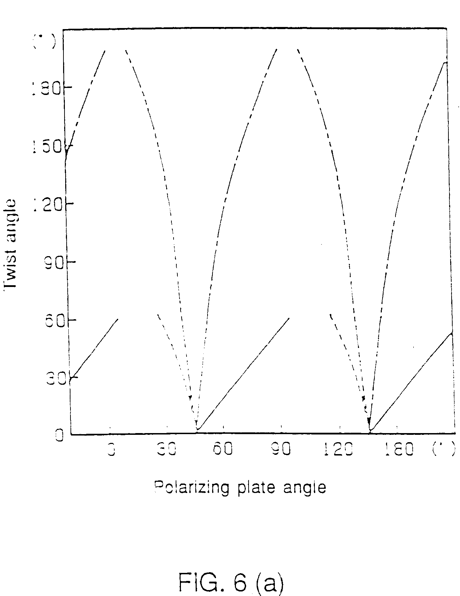

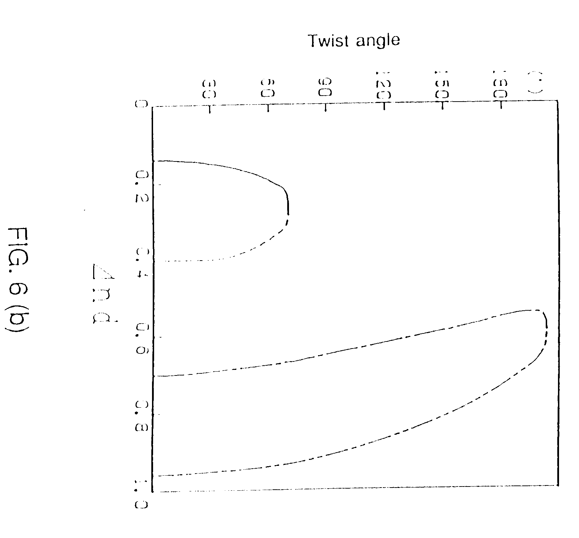

An investigation of the optical characteristics required of the liquid crystal layer revealed the existence of specific conditions for the polarising plate angle, twist angle and $\Delta$ nd. Figures 6(a) and 6(b) show these conditions, with figure 6(a) showing the relationship between the polarising plate angle and twist angle, and figure 6(b) showing the relationship between the twist angle and $\Delta$ nd. The types of line in figure 6 correspond to each other in both figure 6(a) and figure 6(b). The wavelength used was 550 nm. From this investigation, it was found that the optimum values for the polarising plate angle, $\Delta$ nd and the twist angle were not only the values above, but that a continuous range of values was possible. Looking at the locus of the elliptically polarised light at this time, it can be seen that, as in figure 4, the light becomes light that is circularly polarised at the reflective surface and light that is linearly polarised at the emission surface and that has been rotated 90° relative to the incident linearly polarised light. Further, the electro-optical characteristics of the device differ from those of the prior art devices in that, as shown in figure 3, the steepness of the characteristic can be controlled by the twist angle. This type of effect is due to the elasticity of twisted liquid crystal material as in super-twisted nematic (STN) liquid crystal display materials.

It was also found that the optimum value for the polarising plate angle appears in 90° intervals. This is because the effect of $\Delta$ n is exactly the same when linearly polarised light is incident perpendicular to the direction of the liquid crystal.

Figure 6 shows the optimum conditions for monochromatic light, but in determining the actual parameters it is necessary to shift the optimum conditions according to the wavelength range that will be used. Further, it is necessary to employ an effective value $\Delta$ n due to the pre-tilt angle of the liquid crystal materials.

Figure 6 assumes a twist angle range of 200°, but values in a range exceeding this are still possible. However, a relatively large value $\Delta$ nd is required in this case, the change in reflectivity due to the wavelength is large, and the useable wavelength range is limited. It is necessary to set a small value $\Delta$ nd in order to limit the change in reflectivity due to the wavelength, but the liquid crystal layer becomes too thin at an extremely small value for $\Delta$ nd, and so it is preferrable to set the value $\Delta$ nd somewhere in between. In a reflective device, in which the optical length is doubled, a liquid crystal layer thickness that would be permissible in transmission-type liquid crystal devices presents production problems. Therefore, the value $\Delta$ nd should be somewhat larger, to increase the production margin. When $\Delta$ nd is 0.2 as above, the thickness d becomes 2.5 $\mu$m for a typical value $\Delta$ n of 0.08 in a liquid crystal layer with a small value $\Delta$ n. In contrast to this, in a prior art device with a 45° twist, the optimum liquid crystal layer thickness is less than 2 $\mu$m, which results in reduced uniformity and production yield for the conventional devices.

Overall electrode types of electro-optical device according to the invention, such as that shown in figure 1, which do not form picture elements, can be used as electrically controlled glare proof mirrors for automobiles or as optical shutters. Particularly, when the invention is applied to electrically controlled glare proof mirrors, a higher reflectivity may be observed in the ON condition than in conventional two colour pigment types or TN types of electro-optical device with a polarising plate in front and behind.

When used in regular reflective-type liquid crystal display devices that are addressed using an XY matrix, the threshold characteristics provided by the invention can be utilised to increase the number of multiplex driving lines.

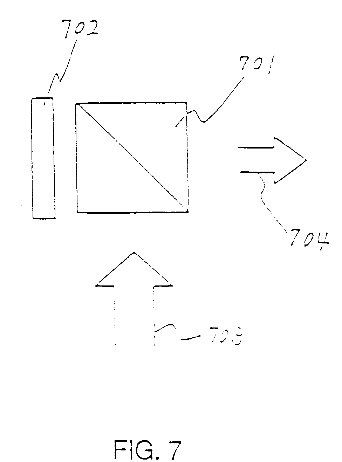

Figure 7 shows the configuration of a modified reflective-type of liquid crystal electro-optical device according to the invention, in which a polarising beam splitter (PBS) 701 is used as a polarising element. The PBS 701 linearly polarises light 703 from a source (not shown) and directs it towards a liquid crystal panel 702. The structure of the liquid crystal panel 702 and the control of the light up to emission are the same as in the case of the device shown in figure 1. The means for analysing the emitted light shifts it by 90° in relation to the time of incidence in the PBS 701. Therefore, the reflected output light drops when there is no electric field, and the impressed voltage-v-reflectivity characteristic becomes symmetrical with respect to the vertical axis by comparison with the voltage-v-reflectivity characteristic shown in figure 3.

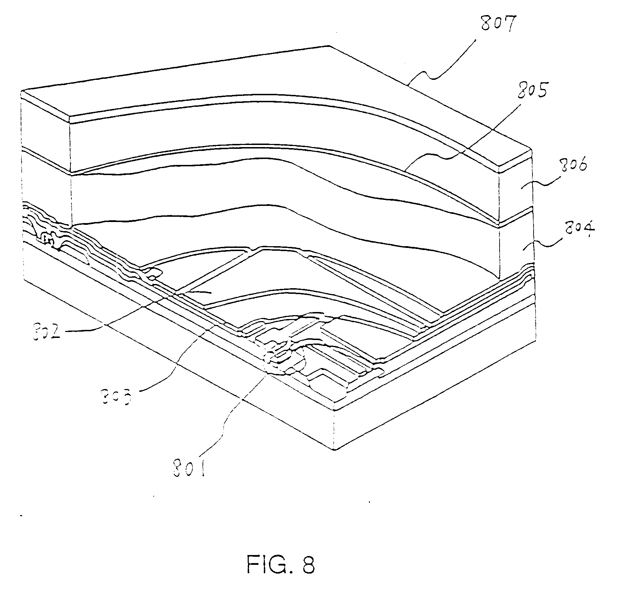

Figure 8 is a fragmented cross-sectional view of an active matrix display panel including a reflective-type liquid crystal electro-optical device according to the invention. Figure 8 shows an example wherein an MOS transistor 801 is positioned at each picture element. As shown in the figure, the device comprises a picture element eletrode 802, an interlayer insulating layer 803, a liquid crystal layer 804, a transparent electrode 805 deposited on an opposing transparent substrate 806, and a polarising plate 807. The active matrix display panel shown here conforms generally to that mentioned in Nikkei Electronics, February 16 (1981), page 164. This invention can of course also be applied to active matrix devices, in which TFT, diodes etc. are arrayed.

By employing a reflective-type of display, the wiring and active elements can be positioned below the picture element electrode. In other words, a larger ratio for the picture element electrode area (numerical aperture), which acts as a picture element, to the picture element area can be achieved regardless of the wiring or active elements, thus preventing a drop in the numerical aperture that accompanies an increased number of picture elements.

Also, light loss is small compared to conventional guest-host types of active matrix panel. Further, since a polarising plate and a diffusion type of reflector are not required on the bottom of the panel as in reflective-type TN liquid crystal panels of the prior art, the display is brighter and colour images can also be produced under low illumination through the use of a colour filter.

In addition, there is also the advantage of an increased retention volume for the liquid crystal layer in the case of a thin liquid crystal layer.

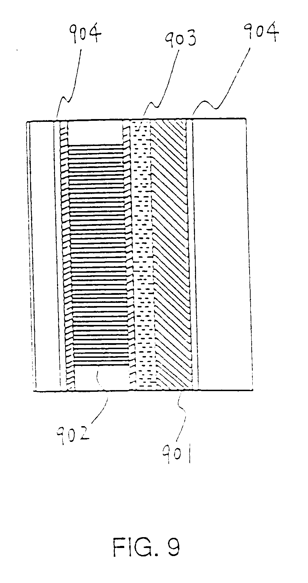

Figure 9 is a cross-section of a device that performs writing with light, including a reflective-type liquid crystal electro-optical device according to the invention. The impedance of a photo-conductive layer 901 is changed by light and controls the electric field impressed on a liquid crystal layer 902. The device further has a reflective layer 903 and a transparent electrode 904. This type of device generally is disclosed in Japanese published Patent Application No. 56-43781 and in J. Opt. Soc. Am., Vol. 70, No. 3, 287 (1980). However, in the present instance, in the liquid crystal layer, $\Delta$ nd is 0.2 and the twist angle is approximately 60° as noted above. In the prior art, $\Delta$ nd is a small value 0.18 and the liquid crystal layer thickness is less than 2 $\mu$m but, in the invention, the liquid crystal layer thickness can be increased to above 2 $\mu$m. In the optical arrangement of the above prior art, the maximum reflectivity in the OFF state is approximately 80%, whereas the present invention achieves a maximum reflectivity in the ON state of nearly 100%.

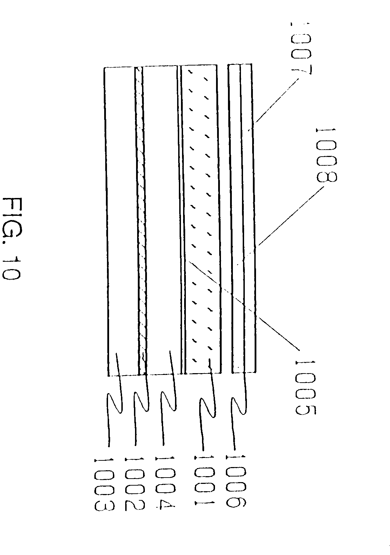

Figure 10 is a cross-section through another embodiment of a reflective-type electro-optical device according to the invention. This device comprises a twisted nematic liquid crystal layer 1004 sandwiched between a transparent substrate 1001 and an opposing substrate 1003, on which a reflective layer 1002 is formed. The transparent electrode 1005 impresses an electric field on the liquid crystal layer 1004. The reflective layer 1002 also serves as another electrode and is formed from a metal thin film. The incidence and emission surfaces are treated with a reflection reducing coating to suppress unwanted light reflection. A circular-polarising plate 1006, comprising a phase plate 1008 adhered to a linear-polarising plate 1007, is used as the polarising element. In this arrangement, the phase plate 1008 comprises a 1/4 λ plate adhered on the liquid crystal side of the polarising element so that the azimuth of its high index of refraction is shifted 45° with respect to the axis of transmission of the linear polarising plate 1007, whereby circularly polarised light is passed. Also the azimuth of the high index of refraction of the 1/4 λ plate 1008 may be perpendicular to the direction of the liquid crystal molecules. By arranging the principle optical axis, in the region of the liquid crystal layer adjacent the 1/4 λ phase plate 1008, and the azimuth of the high index of refraction of the phase plate so that they are perpendicular to each other, an advanced phase and a late phase cancel out one another and the reflection spectrum is compensated.

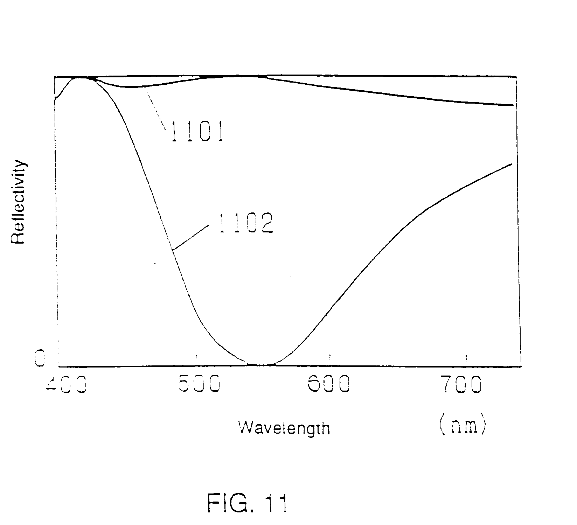

Figure 11 is a graph showing the reflection spectrum in the OFF condition, wherein the reference number 1101 represents the spectrum when Δ nd is 0.57 and the twist angle 180°, and the reference number 1102 represents the reflection spectrum for linearly polarised light incident under the same liquid crystal conditions except that the polarising light angle is 83°, as in the first embodiment, for the sake of comparison. It should be noted that the characteristic is the opposite of that of the first embodiment with respect to reflectivity on the vertical axis, but the reflection spectrum in the OFF condition is wider in spite of the twisted condition.

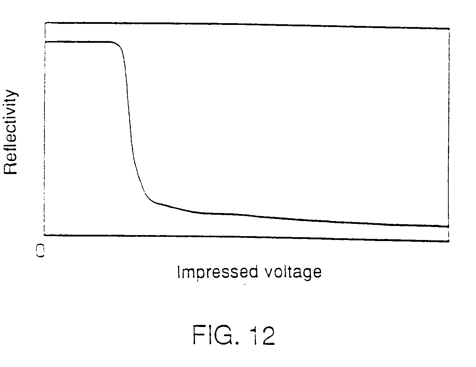

Figure 12 depicts the impressed voltage-v-reflectivity (550 nm) characteristic of the device shown in figure 10. As in the case of the first embodiment, the steepness of the curve can be controlled by the twist angle.

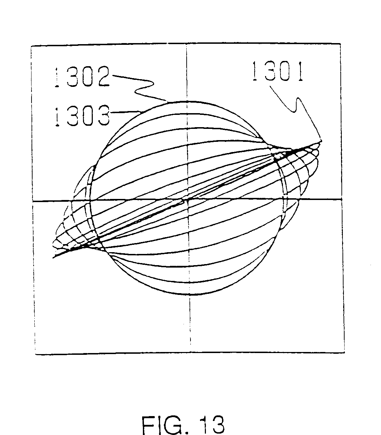

Next, a simple explanation of the principle will be given. Figure 13 shows the change in polarisation in the liquid crystal layer 1004 in the OFF condition. The explanation is based on the simplest case in which the twist angle is 63°, Δ nd is 0.2 and the polarisation angle is 0°. Assuming that incident circularly polarised light 1302 (circularly polarised light rotated to the right is assumed here) enters the liquid crystal layer 1004 via the polarising element when the voltage is zero, the locus of the elliptically polarised light changes as shown in figure 13. This light becomes nearly linearly polarised light 1301 at the reflective surface and is reflected. As it passes back through the liquid crystal layer, it becomes circularly polarised light 1303 that is rotated in the opposite direction, ie to the left, and is emitted. However, since the direction of travel of the light is reversed, the emitted light, which passes through the 1/4 λ plate 1008 and becomes linearly polarised light, is able to pass through the linear polarising plate 1007. As a result, there is no reduction in reflectivity (the OFF condition).

When a voltage is impressed, the liquid crystal molecules become re-oriented in the direction of the electric field because of the anisotropy of the dielectric constant. By this means, the birefringence in the liquid crystal layer disappears, and therefore incident circularly polarised light rotated to the right maintains its polarisation as it is reflected and emitted. This circularly polarised light becomes linearly polarised light at the 1/4 λ plate 1008, which is perpendicular to the direction of such light in the OFF condition, and is stopped by the polarising plate 1007 whereby reflectivity drops (the ON condition). Therefore, this embodiment has a characteristic the opposite of that of the first embodiment with respect to the reflectivity of the vertical axis.

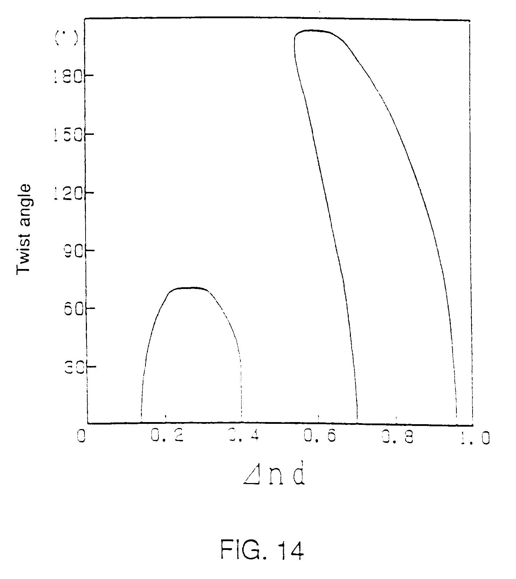

This kind of change in polarisation is produced only under limited conditions, which are depicted in figure 14. These conditions are exactly the same as those represented in figure 6(b) of the first embodiment and have been determined as a result of diligent investigation. That is, the two optical characteristics required of the liquid crystal layer 1004 are that circularly polarised entering light become linearly polarised light at the reflective surface after transmission, and that circularly polarised light that is rotated in the opposite direction from the entering light be provided after transmission back through the liquid crystal layer. It can be assumed that the functioning is similar to the first embodiment since the circularly polarised light and the linearly polarised light have an orthogonal relationship, and since circularly polarised light can be described as the linear combination of two linearly polarised light beams while linearly polarised light can be described as the linear combination of right circularly polarised light and left circularly polarised light.

Like the first embodiment, this embodiment of the invention can be used as an optical shutter with a high reflectivity during transparency. It can also be effectively used in the multiplex driving of XY matrix LCDs with many lines, by taking advantage of the steepness of the voltage-v-reflectivity characteristic, which can be controlled via the twist angle.

The reflection spectrum in the OFF condition has a characteristical the opposite of that of the first embodiment with respect to the reflectivity axis, but due to the compensation effect of the spectrum, a wider spectrum can be achieved.

Further, since there is no specification regarding the polarising plate angle, there is no need to match the angle during production.

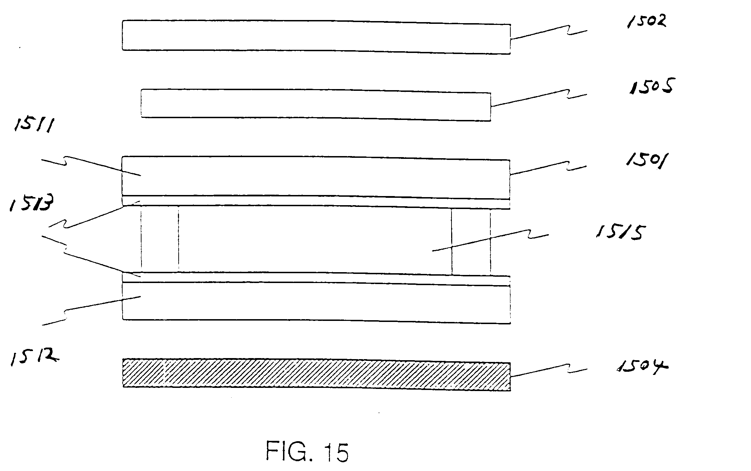

Figure 15 is an exploded cross-section through a further embodiment of liquid crystal electro-optical device according to the invention, comprising a liquid crystal cell 1501, a polarising plate 1502, a reflector 1504 and an optically anisotropic material 1505. The cell 1501 comprises an upper substrate 1511, a lower substrate 1512, transparent electrodes 1513 and a liquid crystal layer 1515.

In a first specific example of this embodiment, the liquid crystal material was XLI-4506 ($\Delta$ n = 0.1438) produced by the E. Merck Company, and it was given a twisted orientation in the liquid crystal cell, which had a cell gap of 5.6 $\mu$m. $\Delta$ nd was 0.81 $\mu$m. A uniaxially oriented film made from a polycarbonate resin was used as the optically anisotropic material, with $\Delta$ n being 0.0039, the film thickness being 80 $\mu$m and $\Delta$ nd being 0.31 $\mu$m.

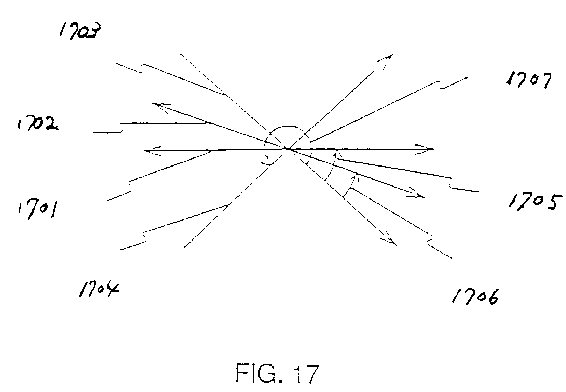

Figure 17 shows the relationship of each of the axes of the elements of the device as seen from the direction of observation (ie from the top of figure 15). In the figure, the reference number 1701 designates the direction of the axis of polarisation of the polarising plate 1502, the reference number 1702 designates the direction of orientation of the uniaxially orientated film used as the optically anisotropic material 1505, the reference number 1703 designates the direction of rubbing on the upper substrate 1511, and the reference number 1704 designates the direction of rubbing on the lower substrate 1502.

In this example, the angle 1705 formed by the directions 1701 and 1703 is set at 40° to the left, the angle 1706 formed by the directions 1702 and 1703 is set at 22° to the left, and the twist angle 1701 of the liquid crystal material is set at 260° to the left.

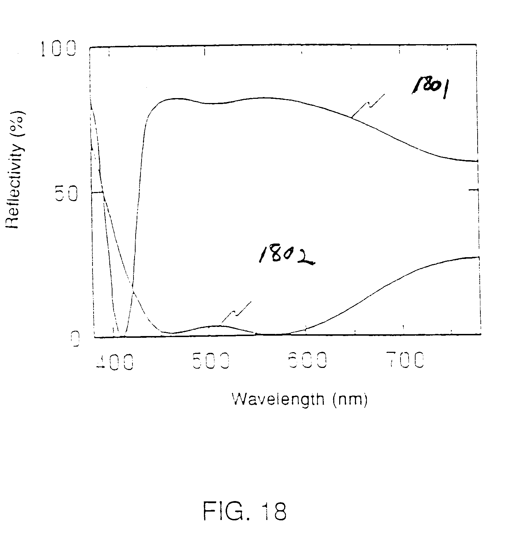

Figure 18 shows the spectral characteristics 1801, 1802 of a liquid crystal display device produced under the above conditions, when the electric field is OFF and ON, respectively. The luminous reflectivity Yoff in the OFF condition was a high 83%, and the display colour was extremely close to white. The luminous reflectivity in the ON condition was a low 2.0%, and the maximum attainable contrast ratio was 1:42.

The liquid crystal display device in this instance had a large twist angle of 260° and the steepness of the voltage-transmissivity characteristic was extremely good, and a high display contrast of 1:20 was obtained even when multiplex driving was performed at a duty ratio of 1/480.

In a further example of the electro-optical device shown in figure 15, the liquid crystal material ZLI-4428 ($\Delta$ n = 0.1222) produced by the E. Merck Company was used in the liquid crystal cell 1501. The cell gap was 6.1 $\mu$m and $\Delta$ nd was 0.73 $\mu$m. A uniaxially oriented film made from a PMMA resin was used as the optically anisotropic material 1505, with $\Delta$ n being 0.00061, the film thickness being 600 $\mu$m, and $\Delta$ nd

being 0.37 $\mu$m. In this example, the angle 1705 was set at 21° to the left, the angle 1706 was set at 10° to the left and the twist angle 1707 was set at 240° to the left.

In this example, a relatively high luminous reflectivity Yoff of 78° was obtained in the OFF condition, and the display colour was close to white. The luminous reflectivity in the ON condition was a low 2.1%, and so the maximum attainable contrast ratio was a high 1:37.

Since a uniaxially orientated film made from a PMMA resin with an optically negative orientation is used in this example as the optically anisotropic material, an excellent viewing angle characteristic is possible.

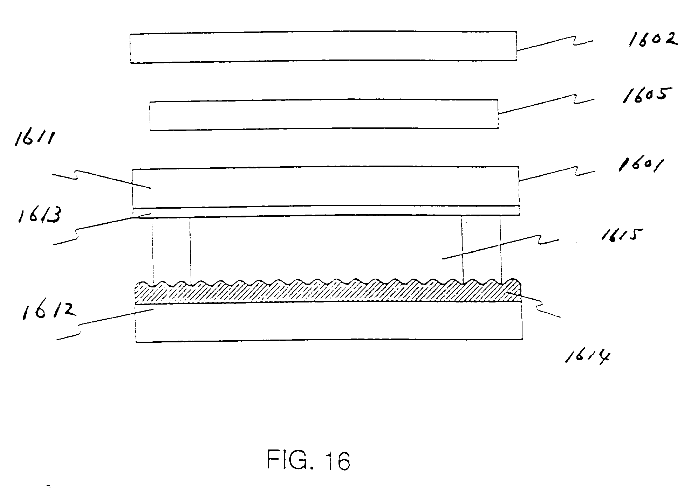

A modification of the electro-optical device of figure 15 is shown in figure 16 and comprises a liquid crystal cell 1601, a polarising plate 1602, and an optically anisotropic material 1605. The cell 1601 comprises an upper substrate 1611, a lower substrate 1612, a transparent electrode 1613, a reflective film 1614, which also serves as a picture element electrode, and a liquid crystal layer 1615.

In a specific example of this device, the liquid crystal material ZLI-4427 ($\Delta$ n = 0.1127) produced by the E. Merck Company was used in the liquid crystal cell 1601, and the average $\Delta$ nd was 0.69 $\mu$m. A uniaxially oriented film made from a polypropylene resin was used as the optically anistropic material 1605, with $\Delta$ n being 0.0018, the film thickness being 200 $\mu$m, and $\Delta$ nd being 0.36. The angle 1705 in figure 17 was set at 13° to the left, the angle 1706 was set at 88° to the left and the twist angle was set at 225° to the left.

A relatively high luminous reflectivity Yoff of 80% was obtained in the OFF condition and the display colour was close to white. The luminous reflectivity in the ON condition was a low 2.2%, thus yielding a high maximum attainable contrast ratio of 1:36.

Here, the reflective film 1614 was a metal aluminium thin film applied by a sputtering method to the surface of a ground glass plate, to give a surface roughness of 0.5 $\mu$m and a reflectance characteristic with low directionality. In addition to aluminium, nickel, chrome or any other material with a silverwhite colour can be used, and the surface roughness can be achieved by roughly polishing the surface of the metal or by chemical treatment.

The reflective film 1614 may be formed into a comb pattern or other pattern, either by patterning the metal thin film directly or by forming a transparent electrode on the metal thin film with an insulator between them and then patterning the transparent electrode. Since the insulator has the effect of softening the surface roughness, it is effective in cases in which the twist angle is large and the d/p margin (d being cell gap, and p being spontaneous pitch) is narrow.

By providing the reflector inside the liquid crystal cell in this way, the problem of double images, which was common in prior art reflective type liquid crystal display devices, is eliminated. Further, the minute variations in the liquid crystal layer thickness have the secondary effect of equalising the display colour and further decreasing colouration.

In the above embodiments, the optically anisotropic material was positioned between the liquid crystal cell and the polarising plate, but it can also be positioned between the liquid crystal cell and the reflector. Further, the optically anisotropic material is not limited to one layer, but rather a display with a higher contrast ratio and less colouration can be achieved by using two or more such layers.

When the rubbing directions 1703 and 1704 for the liquid crystal cell are set so that the direction of orientation 1702 of the uniaxially oriented film is parallel to the horizontal direction of the display surface, the visual angle becomes wider to the left and right, which is convenient for several people to view the screen. On the other hand, when the rubbing directions are set so that the direction of orientation 1702 is parallel to the vertical direction of the display surface, the contrast ratio is increased. In either case the disposition of a uniaxially oriented film in this manner increases the number of expensive films that can be eliminated, thus effectively lowering production costs.

By using a semi-transparent reflector 1614 and providing a back light on the side of the reflector opposite the liquid crystal cell, the display can be used as a transmission-type of device when there is little ambient light, thus compensating for disadvantages of a reflective-type display in these conditions. In this case, however, a polarising plate and, if necessary, an optically anisotropic material must be positioned between the reflector and the back light.

Particular embodiments of the invention are described above, but the invention is not limited to these and can be widely applied to reflective-type optical control devices.

As described above, a larger value $\Delta$ nd is employed in the invention than in the prior art, thus offering a larger allowable margin in production with respect to the liquid crystal layer thickness. The invention as illustrated and described with respect to figure 1 also has the effect of reducing light loss since the light emitted from the liquid crystal layer 104 is nearly linearly polarised light.

Further, the invention facilitates control of the electro-optical characteristics of a device, so that multiplex driving can be improved in devices with a steep characteristic and grey-scale expression can be improved in devices with a moderate characteristic.

The invention as illustrated and described with reference to figure 10 also has the effect of flattening the reflection spectrum in the OFF condition, thus reducing light loss when handling a wide wavelength range and preventing colouration.

In this case, there is also no reduction of the numerical aperture according to the means by which the picture elements are addressed, and so light loss is further reduced.

Also, a liquid crystal display device according to the invention has the advantage that it is possible to eliminate double images in the display.

By using a semi-transparent reflector and providing a back light on the side of the reflector opposite the liquid crystal cell, the display can also be used as a transmission type of display when there is little ambient light.

## Claims

1. A liquid crystal electro-optical device of the reflective-type having a twisted nematic liquid crystal layer (104) sandwiched between two opposed substrates (101, 103), a polarising element (106) for polarising light entering the liquid crysal layer, and a reflective element (102) for reflecting light transmitted by the liquid crystal layer, characterised in that the polarising element, the liquid crystal layer and the reflective element are arranged to co-operate in one state of the electro-optical device so as to convert the light between linearly polarised light at one surface of the liquid crystal layer and circularly polarised light at the other surface of the liquid crystal layer, and so as to alter the direction of polarisation of light emerging from the liquid crystal layer relative to that of light entering the liquid crystal layer.

2. An electro-optical device according to claim 1 characterised in that the polarising element is arranged to supply linearly polarised light to the liquid crystal layer, and in that the liquid crystal layer is arranged in said one state to convert the linearly polarised light from the polarising element to circularly polarised light for reflection by the reflective element and again to linearly polarised light after reflection for return to the polarising element, such that the plane of polarisation of the light emerging from the liquid crystal layer to the polarising element is rotated through 90° relative to the plane of polarisation of the linearly polarised light entering the liquid crystal layer from the polarising element.

3. An electro-optical device according to claim 2 characterised in that the polarising element is arranged to supply linearly polarised light to the liquid crystal layer at an angle to the molecular axis of the liquid crystal material adjacent to the polarising element.

4. An electro-optical device according to claim 1 characterised in that the polarising element is arranged to supply circularly polarised light to the liquid crystal layer, and in that the liquid crystal layer is arranged in said one state to convert the circularly polarised light from the polarising element to linearly polarised light for reflection by the reflective element and back to circularly polarised light for return to the polarising element, such that the circularly polarised light emerging from the liquid crystal layer to the polarising element is rotated in the opposite direction relative to the circularly polarised light entering the liquid crystal layer from the polarising element.

5. An electro-optical device according to any preceding claim characterised in that the reflective element is provided between the opposed substrates and adjacent the liquid crystal layer.

6. An electro-optical device according to any preceding claim characterised in that a part (1614) defining the surface of the liquid crystal layer adjacent the reflective element has a roughened surface facing the liquid crystal layer.

7. An electro-optical device according to any preceding claim further characterised by at least one layer (1505) of an optically anisotropic material.

8. A reflection-type liquid crystal electro-optical device with twisted nematic liquid crystal (104) sandwiched between two substrates (101, 103) disposed opposite each other, wherein a twisted nematic liquid crystal layer is employed that allows linearly polarised incident light to enter and become circularly polarised light at the reflecting surface (102) and then linearly polarised light after reflection whose plane of polarisation is rotated 90° from that of the incident light at the emission surface.

9. A reflection-type liquid crystal electro-optical device with twisted liquid crystal (1004) sandwiched between two substrates (1001, 1003) disposed opposite each other, wherein a twisted nematic liquid crystal layer is employed that allows circularly polarised incident light to enter and become linearly polarised light at the reflecting surface (1002) and then circularly polarised light after reflection that has been rotated opposite the incident circularly polarised light at the emission surface.

10. A reflection-type liquid crystal electro-optical device with twisted nematic liquid crystal (1515) sandwiched between two substrates (1511, 1512) disposed opposite each other, wherein the reflection-type liquid crystal electro-optical device comprises a liquid crystal cell (1501) made up of liquid crystals sandwiched between two substrates in a twisted orientation, one polarising plate (1502) that combines polarising elements and analyser elements, one reflecting element (1504), and at least one layer (1505) of an optically anisotropic material other than the liquid crystal of the liquid crystal cell.

FIG. 1

FIG. 2

FIG. 3

401

402

403

FIG. 4

FIG. 5 (a)

FIG. 5 (b)

FIG. 5 (c)

FIG. 6 (a)

FIG. 6 (b)

FIG. 7

FIG. 8

FIG. 9

FIG. 10

FIG. 11

FIG. 12

FIG. 13

FIG. 14

FIG. 15

1602

1605

1611

1601

1613

1615

1612

1614

FIG. 16

FIG. 17

FIG. 18